# EUROPEAN PATENT APPLICATION

(11) **EP 3 560 354 A1**
(43) Date of publication of application: **30.10.2019**
(21) Application number: 17882886.9
(22) Date of filing: 18.12.2017
(51) Int. Cl.: A23L 33/18, A23L 2/00, A23L 2/52, A23L 2/66

(54) **FOOD AND BEVERAGES CONTAINING CYCLO(ALANYL-SERINE) AND ETHANOL AND/OR PROPYLENE GLYCOL**

(30) Priority: 21.12.2016 JP 2016247619
(71) Applicant: Suntory Holdings Limited, Osaka-shi, Osaka 530-8203 (JP)
(72) Inventor: YAMAMOTO, Kenji, Soraku-gun Kyoto 619-0284 (JP); TAGUCHI, Wakana, Kawasaki-shi Kanagawa 211-0067 (JP); MATSUBAYASHI, Hideki, Kawasaki-shi Kanagawa 211-0067 (JP)
(74) Representative: Vossius & Partner Patentanwälte Rechtsanwälte mbB
(86) International application number: PCT/JP2017/045245
(87) International publication number: WO 2018/117001

(57) **Abstract**

Provided is a food or beverage product having good taste, with lingering unpleasant bitterness unique to cycloalanylserine in the food or beverage product reduced. The content of cycloalanylserine and the content of ethanol and/or propylene glycol in the food or beverage product are adjusted to fall within specific ranges.

## Description

### TECHNICAL FIELD

The present invention relates to a food or beverage product containing cycloalanylserine, and ethanol and/or propylene glycol. More specifically, it relates to a food or beverage product wherein a content of cycloalanylserine falls within a specific range and a content of ethanol and/or propylene glycol falls within a specific range, a method for producing the food or beverage product, and a method for reducing lingering unpleasant bitterness of cycloalanylserine in a food or beverage product.

### BACKGROUND ART

"Dipeptides" in which two amino acids are bound are gaining attention as functional substances. Physical or chemical properties which are not present in single amino acids or new functions can be added to such dipeptides, and thus they are expected to have application ranges beyond single amino acids.

In recent years, a diketopiperazine derivative which is a cyclic dipeptide having a cyclic structure formed by dehydration condensation of an amino group present at the terminal of a dipeptide and a carboxyl group has been developed. The cyclic dipeptide is reported to have various physiological activities, and the demand thereof is expected to expand in the medical and pharmacological fields. For example, it is reported in PTL 1 that a cyclic dipeptide having a 2,5-diketopiperazine structure has antidepressant activity, learning motivation improving activity, and the like. Further, NPL 1 discloses that cyclohistidylproline [Cyclo(His-Pro)] exhibits many physiological activities such as central nervous system activities, e.g., decreasing the body temperature and suppressing appetite, and hormone-like activities e.g., suppressing prolactin secretion and promoting growth hormone secretion. Further, NPL 2 discloses that cyclotryptophanylproline [Cyclo(Trp-Pro)] exhibits anticancer activity, cyclohistidylproline [Cyclo(His-Pro)] and cycloglycylproline [Cyclo(Gly-Pro)] exhibit antibacterial activity, cyclohistidylproline [Cyclo(His-Pro)] exhibits neuroprotective activity, and cycloglycylproline [Cyclo(Gly-Pro)] exhibits memory function improving activity.

### CITATION LIST

### PATENT LITERATURE

PTL 1: Japanese Translation of PCT International Application Publication No. 2012-517998 T

### NON PATENT LITERATURE

NPL 1: Peptides, 16 (1), 151-164 (1995)
NPL 2: Chemical Reviews, 112, 3641-3716 (2012)

### SUMMARY OF INVENTION

### TECHNICAL PROBLEM

As described above, cyclic dipeptides have various physiological activities. For example, cycloalanylserine has glucagon-like peptide-2 (GLP-2) secretion-promoting activity and TRPV1-stimulating activity, as described in PCT/JP2016/069084 and PCT/JP2016/070639. Meanwhile, cycloalanylserine has lingering unpleasant bitterness after intake. Therefore, development of a method for reducing the lingering unpleasant bitterness of cycloalanylserine to produce an easy-to-take food or beverage product is desired.

It is an object of the present invention to provide a food or beverage product having good taste with the lingering unpleasant bitterness of cycloalanylserine in the food or beverage product reduced.

### SOLUTION TO PROBLEM

First, the inventors have found that, in the case of using cycloalanylserine alone for a food or beverage product, the food or beverage product cannot be favorably taken due to its lingering unpleasant bitterness after intake. However, the inventors have found surprisingly that, in a food or beverage product containing a certain amount of cycloalanylserine, the lingering unpleasant bitterness of cycloalanylserine is reduced by adjusting the content of ethanol and/or propylene glycol in the food or beverage product to fall within a specific range, thereby accomplishing the present invention.

That is, the present invention relates to the following but is not limited thereto.
(1) A food or beverage product comprising cycloalanylserine, and ethanol and/or propylene glycol, wherein
   a content of cycloalanylserine in the food or beverage product is 0.0015 to 5.0 mg/100 mL,
   a content of ethanol in the food or beverage product is 0.00080 to 0.60 g/100 mL, and
   a content of propylene glycol in the food or beverage product is 0.00080 to 0.60 g/100 mL.
(2) The food or beverage product according to (1), wherein the content of cycloalanylserine is 0.0070 to 2.0 mg/100 mL.
(3) The food or beverage product according to (1) or (2), wherein the content of ethanol is 0.0080 to 0.12 g/100 mL.
(4) The food or beverage product according to any of (1) to (3), wherein the content of propylene glycol is 0.0080 to 0.12 g/100 mL.
(5) The food or beverage product according to any of (1) to (4), wherein the content of cycloalanylserine (mg/100 mL) (X) and the content of ethanol (g/100 mL) (Y) satisfy Y ≤ 0.3837 × X^{-0.239} and Y ≥ 0.0028 × X^{0.6556}.
(6) The food or beverage product according to any of (1) to (5), wherein the content of cycloalanylserine (mg/100 mL) (X) and the content of ethanol (g/100 mL) (Y) satisfy Y ≤ 0.2307 × X^{-0.08} and Y ≥ 0.0447 × X^{0.4497}.
(7) The food or beverage product according to any of (1) to (6), wherein the content of cycloalanylserine (mg/100 mL) (X) and the content of propylene glycol (g/100 mL) (Y) satisfy Y ≤ 0.2659 × X^{-0.425} and Y ≥ 0.0022 × X^{0.551}.
(8) The food or beverage product according to any of (1) to (7), wherein the content of cycloalanylserine (mg/100 mL) (X) and the content of propylene glycol (g/100 mL) (Y) satisfy Y ≤ 0.0533 × X^{-0.25} and Y ≥ 0.0045 × x^{0.3495}.
(9) The food or beverage product according to any of (1) to (8), wherein cycloalanylserine is added as a heat-treated product of animal and plant-derived peptide.
(10) The food or beverage product according to (9), wherein the heat-treated product of animal or plant-derived peptide is obtained from soybean peptide, tea peptide, whey peptide, or collagen peptide.
(11) The food or beverage product according to any of (1) to (10), wherein the food or beverage product is a transparent beverage.
(12) The food or beverage product according to any of (1) to (11), wherein the food or beverage product is packaged in a container.
(13) A method for producing a food or beverage product, comprising:
   step (a) of adding cycloalanylserine to adjust a content of cycloalanylserine in the food or beverage product to 0.0015 to 5.0 mg/100 mL; and
   step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL.
(14) The production method according to (13), wherein the content of cycloalanylserine adjusted in step (a) is 0.0070 to 2.0 mg/100 mL.
(15) The production method according to (13) or (14), wherein the content of ethanol adjusted in step (b) is 0.0080 to 0.12 g/100 mL.
(16) The production method according to any of (13) to (15), wherein the content of propylene glycol adjusted in step (b) is 0.0080 to 0.12 g/100 mL.
(17) A method for reducing lingering unpleasant bitterness of cycloalanylserine in a food or beverage product, comprising:
   step (a) of adding cycloalanylserine to adjust a content of cycloalanylserine in the food or beverage product to 0.0015 to 5.0 mg/100 mL; and
   step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL.
(18) The method according to (17), wherein the content of cycloalanylserine adjusted in step (a) is 0.0070 to 2.0 mg/100 mL.
(19) The method according to (17) or (18), wherein the content of ethanol adjusted in step (b) is 0.0080 to 0.12 g/100 mL.
(20) The method according to any of (17) to (19), wherein the content of propylene glycol adjusted in step (b) is 0.0080 to 0.12 g/100 mL.

### ADVANTAGEOUS EFFECTS OF INVENTION

The present invention can give a food or beverage product having good taste with lingering unpleasant bitterness unique to cycloalanylserine in the food or beverage product reduced.

### DESCRIPTION OF EMBODIMENTS

### 1. Food or beverage product

One embodiment of the present invention is a food or beverage product comprising cycloalanylserine, and ethanol and/or propylene glycol, wherein a content of cycloalanylserine in the food or beverage product falls within a specific range and a content of ethanol and/or propylene glycol in the food or beverage product falls within a specific range.

### 1-1. Cycloalanylserine

Cycloalanylserine in the present invention is one of cyclic dipeptides and is a compound having a diketopiperazine structure formed by dehydration condensation of alanine and serine.

Cycloalanylserine in the present invention may be in the form of a pharmacologically acceptable salt (including inorganic salts and organic salts) such as sodium salt, potassium salt, calcium salt, magnesium salt, ammonium salt, hydrochloride, sulfate, nitrate, phosphate, and organic acid salts (such as acetate, citrate, maleate, malate, oxalate, lactate, succinate, fumarate, propionate, formate, benzoate, picrate, benzene sulfonate, and trifluoroacetate) of cycloalanylserine, but there is no limitation to these. Such a salt of cycloalanylserine can be easily prepared by those skilled in the art using any known method in the field. In this description, "cycloalanylserine or a salt thereof" may be collectively referred to simply as "cycloalanylserine".

Cycloalanylserine used in the present invention can be prepared according to a known method in the field. For example, it may be produced by a chemical synthesis method, an enzymatic method, or a microbial fermentation method, may be synthesized by dehydration and cyclization of linear alanylserine, or can be prepared according to the method described in Japanese Patent Application Laid-Open No. 2003-252896 or Journal of Peptide Science, 10, 737-737, 2004. For example, an animal or plant-derived peptide obtained by applying enzymatic treatment or heat treatment to a raw material containing an animal or plant-derived protein is further subjected to high-temperature heat treatment, so that a heat-treated product of the animal or plant-derived peptide rich in cycloalanylserine can be obtained. From these viewpoints, cycloalanylserine used in the present invention may be chemically or biologically synthesized or may be obtained from an animal or plant-derived peptide.

The content of cycloalanylserine in the food or beverage product of the present invention is not specifically limited, but when the content of cycloalanylserine is excessively large, favorable intake may be impossible due to excessively strong lingering unpleasant bitterness of cycloalanylserine. The lower limit of the content of cycloalanylserine in the food or beverage product of the present invention is 0.0015 mg or more, preferably 0.0018 mg or more, more preferably 0.0070 mg or more, furthermore preferably 0.0073 mg or more, with respect to 100 mL of the food or beverage product. Further, the upper limit of the content of cycloalanylserine in the food or beverage product of the present invention is preferably 5.3 mg or less, more preferably 5.0 mg or less, 3.0 mg or less, furthermore preferably 2.0 mg or less, particularly preferably 1.8 mg or less, with respect to 100 mL of the food or beverage product. Typically, the content range of cycloalanylserine in the food or beverage product of the present invention is 0.0015 to 5.3 mg, preferably 0.0015 to 5.0 mg, more preferably 0.0018 to 3.0 mg, furthermore preferably 0.0070 to 2.0 mg, particularly preferably 0.073 to 1.8 mg, with respect to 100 mL of the food or beverage product.

The content of cycloalanylserine can be measured by a known method and can be measured, for example, by the LC-MS/MS method.

In the present invention, the method for adjusting the content of cycloalanylserine is not specifically limited, as long as the content of cycloalanylserine in the food or beverage product falls within the aforementioned ranges. For example, commercially available cycloalanylserine, synthetic cycloalanylserine that is produced by a chemical synthesis method, an enzymatic method, or a microbial fermentation method, or a heat-treated product of animal or plant-derived peptide rich in cycloalanylserine can be used. Further, only one of commercially available or synthetic products of cycloalanylserine, and a heat-treated product of animal or plant-derived peptide rich in cycloalanylserine can be used, or two or more of them can be used in combination.

A heat-treated product of animal or plant-derived peptide contains a wide variety of cyclic dipeptides other than cycloalanylserine. Therefore, in the case of adjusting the content of cycloalanylserine in the food or beverage product using such a heat-treated product of animal or plant-derived peptide, cyclic dipeptides other than cycloalanylserine are also added in the food or beverage product. However, in the present invention, the lingering unpleasant bitterness unique to cycloalanylserine is made noticeable, regardless of the content of other cyclic dipeptides, when the content of cycloalanylserine in the food or beverage product falls within a predetermined range, and the lingering unpleasant bitterness of cycloalanylserine is reduced, regardless of the content of other cyclic dipeptides, when the content of ethanol and/or propylene glycol in the food or beverage product is adjusted to fall within a specific range.

### 1-2. Heat-treated product of animal or plant-derived peptide

In this description, the "animal or plant-derived peptide" is not specifically limited, but soybean peptide, tea peptide, malt peptide, whey peptide, and collagen peptide, for example, can be used therefor. Among these, soybean peptide and tea peptide are preferable in the present invention. An animal or plant-derived peptide prepared from a raw material containing an animal or plant-derived protein or a protein using a known method may be used, or a commercially available animal or plant-derived peptide may be used.

### 1-2-1. Soybean peptide

In this description, "soybean peptide" refers to a low-molecular weight peptide obtained by applying enzymatic treatment or heat treatment to soy protein to lower the molecular weight of the protein. Any soybean (scientific name: Glycine max) can be used as a raw material with no limitation in variety and production area, and processed products such as a crushed product can be also used.

### 1-2-2. Tea peptide

In this description, "tea peptide" refers to a low-molecular weight peptide derived from tea obtained by applying enzymatic treatment or heat treatment to a tea (including tea leaves or used tea leaves) extract to lower the molecular weight of the protein. As the tea leaves serving as a raw material to be extracted, portions that can be extracted for intake such as leaves and stems of tea produced from tea trees (scientific name: Camellia sinensis) can be used. Further, the form such as macrophyllous and powder forms is not limited. The harvest time of tea leaves can be also appropriately selected corresponding to the desired flavor.

### 1-2-3. Malt peptide

In this description, "malt peptide" refers to a low-molecular weight peptide derived from malt obtained by applying enzymatic treatment or heat treatment to an extract obtained from malt or a ground product thereof to lower the molecular weight of the protein. Any malt peptide can be used as a raw material with no limitation in variety and production area, but barley malt obtained by germinating seeds of barley is particularly suitably used therefor. In this description, barley malt may be expressed simply as malt.

### 1-2-4. Whey peptide

The raw material of whey peptide is not specifically limited, but examples thereof include WPC (Whey Protein Concentrate) and WPI (Whey Protein Isolate) which are whey proteins. Whey peptide refers to a product obtained by degrading such a whey protein with an enzyme or the like. The degree of degradation may vary, but when the degree of degradation is low, milk odor tends to be stronger, and the liquid after dissolution tends to be opaque (turbid). Meanwhile, when the degree of degradation is high, the liquid after dissolution tends to be transparent, but bitterness and astringency tend to increase.

### 1-2-5. Collagen peptide

In this description, "collagen peptide" refers to a low-molecular weight peptide obtained by applying enzymatic treatment or heat treatment to collagen or a ground product thereof to lower the molecular weight of collagen. Collagen is a main protein for connective tissues of animals and is the most abundant protein in mammalian bodies including humans.

### 1-2-6. Heat-treated product of animal or plant-derived peptide

As described above, a heat-treated product of animal or plant-derived peptide rich in cycloalanylserine can be obtained by applying high-temperature heat treatment to an animal or plant-derived peptide. In this description, the "high-temperature heat treatment" is treatment for a certain time at a temperature of 100°C or more and a pressure over the atmospheric pressure. As a high-temperature and high-pressure treatment device, a pressure resistant extractor, a pressure cooker, an autoclave or the like can be used corresponding to the conditions.

The temperature in the high-temperature heat treatment is not specifically limited, as long as it is 100°C or more, but is preferably 100°C to 170°C, more preferably 110°C to 150°C, furthermore preferably 120°C to 140°C. This temperature is a value obtained by measuring the temperature at the outlet of an extraction column in the case of using a pressure resistant extractor as a heating device and is a value obtained by measuring the temperature at the center of a pressure container in the case of using an autoclave as a heating device.

The pressure in the high-temperature heat treatment is not specifically limited, as long as it is a pressure over the atmospheric pressure, but is preferably 0.101 MPa to 0.79 MPa, more preferably 0.101 MPa to 0.60 MPa, furthermore preferably 0.101 MPa to 0.48 MPa.

The time of the high-temperature heat treatment is not specifically limited, as long as a treated material containing cycloalanylserine is obtained, but is preferably about 15 minutes to 600 minutes, more preferably about 30 minutes to 500 minutes, furthermore preferably about 60 minutes to 300 minutes.

Further, the conditions for the high-temperature heat treatment of the animal or plant-derived peptide is not specifically limited, as long as a treated material containing cycloalanylserine is obtained, but [temperature:pressure:time] is preferably [100°C to 170°C:0.101 MPa to 0.79 MPa:15 minutes to 600 minutes], more preferably [110°C to 150°C:0.101 MPa to 0.60 MPa:30 minutes to 500 minutes], furthermore preferably [120°C to 140°C:0.101 MPa to 0.48 MPa:60 minutes to 300 minutes].

The heat-treated product of animal or plant-derived peptide obtained may be subjected to treatment such as filtration, centrifugation, concentration, ultrafiltration, freeze drying, and powderization, as needed. Further, if a desired content of specific cycloalanylserine in the heat-treated product of animal or plant-derived peptide is not satisfied, other animal or plant-derived peptides, commercially available products, or synthetic products can be appropriately used and added to the specific cycloalanylserine that is insufficient.

### 1-3. Ethanol and propylene glycol

The food or beverage product of the present invention contains ethanol and/or propylene glycol. The content of ethanol and/or propylene glycol in the food or beverage product of the present invention is not specifically limited. However, when the content of ethanol and/or propylene glycol in the food or beverage product of the present invention is excessively low or excessively high, it may be difficult to obtain the effect of reducing the lingering unpleasant bitterness unique to cycloalanylserine. Therefore, the upper limit of the content of ethanol in the food or beverage product of the present invention is preferably 0.00080 g/100 mL, more preferably 0.0010 g/100 mL, furthermore preferably 0.0080 g/100 mL, particularly preferably 0.010 g/100 mL. Further, the upper limit of the content of ethanol in the food or beverage product of the present invention is preferably 0.60 g/100 mL, more preferably 0.50 g/100 mL, furthermore preferably 0.12 g/100 mL, particularly preferably 0.10 g/100 mL. Typically, the content range of ethanol in the food or beverage product of the present invention is preferably 0.00080 to 0.60 g/100 mL, more preferably 0.0010 to 0.50 g/100 mL, furthermore preferably 0.0080 to 0.12 g/100 mL, particularly preferably 0.010 to 0.10 g/100 mL.

Further, the upper limit of the content of propylene glycol in the food or beverage product of the present invention is preferably 0.00080 g/100 mL, more preferably 0.0010 g/100 mL, furthermore preferably 0.0080 g/100 mL, particularly preferably 0.010 g/100 mL. Further, the upper limit of the content of propylene glycol in the food or beverage product of the present invention is preferably 0.60 g/100 mL, more preferably 0.50 g/100 mL, furthermore preferably 0.12 g/100 mL, particularly preferably 0.10 g/100 mL. Typically, the content range of propylene glycol in the food or beverage product of the present invention is preferably 0.00080 to 0.60 g/100 mL, more preferably 0.0010 to 0.50 g/100 mL, furthermore preferably 0.0080 to 0.12 g/100 mL, particularly preferably 0.010 to 0.10 g/100 mL.

The content of ethanol and/or propylene glycol in the food or beverage product can be measured by those skilled in the art using a known method such as high-performance liquid chromatography (HPLC).

In the present invention, the method for adjusting the content of ethanol and/or propylene glycol is not specifically limited, as long as the content of ethanol and/or propylene glycol in the food or beverage product falls within the aforementioned ranges. For example, commercially available products or synthetic products of ethanol or propylene glycol, or raw materials (such as food or beverage products), various additives, or the like containing ethanol or propylene glycol can be also used. Further, only one of commercially available products or synthetic products of ethanol and propylene glycol, or raw materials, various additives, or the like containing ethanol or propylene glycol can be used, or two or more of them can be also used in combination.

### 1-4. Relationship between content of cycloalanylserine and content of ethanol or propylene glycol

In the food or beverage product of the present invention, the content of cycloalanylserine (mg/100 mL) (X) and the content of ethanol (g/100 mL) (Y) preferably satisfy Y ≤ 0.3837 × X^{-0.239} and Y ≥ 0.0028 × X^{0.6556}, more preferably Y ≤ 0.2307 × X^{-0.08} and Y ≥ 0.0447 × X^{0.4497}, for reducing the lingering unpleasant bitterness of cycloalanylserine in the food or beverage product. Further, in an aspect, the content of cycloalanylserine (mg/100 mL) (X) and the content of propylene glycol (g/100 mL) (Y) preferably satisfy Y ≤ 0.2659 × X^{-0.425} and Y ≥ 0.0022 × X^{0.551}, more preferably Y ≤ 0.0533 × X^{-0.25} and Y ≥ 0.0045 × X^{0.3495}.

### 1-5. Type of food or beverage product

One embodiment of the present invention is a food or beverage product comprising cycloalanylserine, and ethanol and/or propylene glycol, wherein a content of cycloalanylserine in the food or beverage product falls within a specific range and a content of ethanol and/or propylene glycol in the food or beverage product falls within a specific range.

Preferable ranges of the content of cycloalanylserine and the content of ethanol and/or propylene glycol are as mentioned above, and a food or beverage product having good taste with lingering unpleasant bitterness unique to cycloalanylserine in the food or beverage product reduced can be obtained by adjusting the content of cycloalanylserine and the content of ethanol and/or propylene glycol to the aforementioned ranges. In this description, the "lingering unpleasant bitterness unique to cycloalanylserine" means unfavorable aftertaste with stingy bitterness remaining on the tongue after intake.

Further, it has been confirmed that cycloalanylserine has GLP-2 secretion-promoting activity and TRPV1-stimulating activity (PCT/JP2016/069084 and PCT/JP2016/070639), and the food or beverage product of the present invention can be a food or beverage product for promoting GLP-2 secretion or stimulating TRPV1. Further, it also can be a food or beverage product with a display of a function relating to promotion of GLP-2 secretion or stimulation of TRPV1.

The type of the food or beverage product of the present invention is not specifically limited, but examples thereof include foods, beverages, food/beverage compositions, food compositions, and beverage compositions. The food or beverage product of the present invention is preferably a beverage. Further, the type of beverage is not specifically limited and may be any one of carbonated beverages, non-carbonated beverages, alcohol beverages, non-alcohol beverages, sports beverages, nutrition beverages, functional beverages, and near-water beverages.

The food or beverage product of the present invention is preferably a transparent beverage. The "transparent beverage" means a visually transparent beverage like water without white turbidity like so-called sports drinks or turbidity like turbid juices. The transparency of the beverage can be quantified, for example, using a known method for measuring the liquid turbidity. For example, those with an absorbance, as measured using an ultraviolet visible spectrophotometer (such as UV-1600 (available from SHIMADZU CORPORATION)) at a wavelength of 660 nm, of 0.06 or less can be referred to as being "transparent".

The color of the beverage is not specifically limited, and the beverage may be colored as long as the aforementioned transparency is maintained. The color of the beverage can be quantified, for example, using a known method for measuring the color difference of an object. For example, those with a ΔE value of transmitted light, as measured using a colorimeter (such as ZE2000 (available from NIPPON DENSHOKU INDUSTRIES CO., LTD.)) with reference to pure water, of 3.5 or less can be referred to as being "colorless". Preferably, the ΔE value is 2.3 or less.

### 1-6. Other components

The food or beverage product of the present invention may contain various additives corresponding to the type of the food or beverage product other than the various components mentioned above. Examples of the various additives include sweeteners of saccharides other than above, acidulants, perfumes, vitamins, pigments, antioxidants, emulsifiers, preservatives, extracts, dietary fibers, pH adjusters, and quality stabilizers.

### 1-7. Food or beverage product packaged in container

The food or beverage product of the present invention can be packaged in a container after undergoing a step such as sterilization, as required. For example, a method of heat-sterilizing the food or beverage product after being packaged in a container or a method of sterilizing the food or beverage product and thereafter packaging it into a container in a sterile environment can be used.

The type of container is not particularly limited, and any one of containers generally used for food or beverage products such as resin containers including PET bottles, paper containers including paper packs, glass containers including glass bottles, metal containers including aluminum cans and steel cans, and aluminum pouches, for example, can be used.

### 2. Method for producing food or beverage product

According to an embodiment, the present invention is a method for producing a food or beverage product, the method comprising: step (a) of adding cycloalanylserine to adjust a content of cycloalanylserine in the food or beverage product to 0.0015 to 5.0 mg/100 mL; and step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL. Further, the content of cycloalanylserine in the food or beverage product adjusted in step (a) above can be also 0.0015 to 5.3 mg/100 mL, 0.0015 to 5.0 mg/100 mL, 0.0018 to 3.0 mg/100 mL, 0.0070 to 2.0 mg/100 mL, or 0.073 to 1.8 mg/100 mL. Further, the content of ethanol in the food or beverage product adjusted in step (b) above can be also 0.00080 to 0.60 g/100 mL, 0.0010 to 0.50 g/100 mL, 0.0080 to 0.12 g/100 mL, or 0.010 to 0.10 g/100 mL, and the content of propylene glycol in the food or beverage product adjusted in step (b) above can be also 0.00080 to 0.60 g/100 mL, 0.0010 to 0.50 g/100 mL, 0.0080 to 0.12 g/100 mL, or 0.010 to 0.10 g/100 mL.

Further, the method preferably comprises a step of adjusting the content of cycloalanylserine (mg/100 mL) (X) and the content of ethanol (g/100 mL) (Y) to satisfy Y ≤ 0.3837 × X^{-0.239} and Y ≥ 0.0028 × X^{0.6556} or to satisfy Y ≤ 0.2307 × X^{-0.08} and Y ≥ 0.0447 × X^{0.4497}. Further, in an aspect, the method preferably comprises a step of adjusting the content of cycloalanylserine (mg/100 mL) (X) and the content of propylene glycol (g/100 mL) (Y) to satisfy Y ≤ 0.2659 × X^{-0.425} and Y ≥ 0.0022 × X^{0.551} or to satisfy Y ≤ 0.0533 × X^{-0.25} and Y ≥ 0.0045 × X^{0.3495}.

In the method for producing a food or beverage product of the present invention, the method for adjusting the contents of cycloalanylserine, ethanol, and propylene glycol is not specifically limited, and the contents can be adjusted to predetermined ranges, for example, by adding cycloalanylserine, ethanol, and propylene glycol. The method for adding cycloalanylserine, ethanol, and propylene glycol is not specifically limited, and commercially available products or synthetic products of cycloalanylserine, ethanol, or propylene glycol may be added, or raw materials containing cycloalanylserine, ethanol, or propylene glycol may be added, for example. The content ranges of cycloalanylserine, ethanol, and propylene glycol are as mentioned above.

The type of the food or beverage product produced in the present invention is not specifically limited, as described above, but preferable examples of the food or beverage product in the present invention include beverages such as carbonated beverages, non-carbonated beverages, alcohol beverages, non-alcohol beverages, sports beverages, nutrition beverages, functional beverages, and near-water beverages. Further, the food or beverage product produced in the present invention is preferably a transparent beverage. The "transparent beverage" is as described above.

The method for producing a food or beverage product of the present invention can further comprise the steps of adding an additive or the like, which is generally contained in food or beverage products, and packaging the food or beverage product in a container. The types of additives and container are as described above, and a known method can be used as the packaging method in the container.

In the method for producing a food or beverage product of the present invention, the aforementioned various steps may be performed in any order, as long as the contents and the weight ratio of the food or beverage product finally obtained fall within the predetermined ranges.

### 3. Method for reducing lingering unpleasant bitterness of cycloalanylserine in food or beverage product

According to an embodiment, the present invention is a method for reducing lingering unpleasant bitterness of cycloalanylserine in a food or beverage product, the method comprising: step (a) of adding cycloalanylserine to adjust a content of cycloalanylserine in the food or beverage product to 0.0015 to 5.0 mg/100 mL; and step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL. Further, the content of cycloalanylserine in the food or beverage product adjusted in step (a) above can be also 0.0015 to 5.3 mg/100 mL, 0.0015 to 5.0 mg/100 mL, 0.0018 to 3.0 mg/100 mL, 0.0070 to 2.0 mg/100 mL, or 0.073 to 1.8 mg/100 mL. Further, the content of ethanol in the food or beverage product adjusted in step (b) above can be also 0.00080 to 0.60 g/100 mL, 0.0010 to 0.50 g/100 mL, 0.0080 to 0.12 g/100 mL, or 0.010 to 0.10 g/100 mL, and the content of propylene glycol in the food or beverage product adjusted in step (b) above can be also 0.00080 to 0.60 g/100 mL, 0.0010 to 0.50 g/100 mL, 0.0080 to 0.12 g/100 mL, or 0.010 to 0.10 g/100 mL.

Further, the method preferably comprises a step of adjusting the content of cycloalanylserine (mg/100 mL) (X) and the content of ethanol (g/100 mL) (Y) to satisfy Y ≤ 0.3837 × X^{-0.239} and Y ≥ 0.0028 × X^{0.6556} or to satisfy Y ≤ 0.2307 × X^{-0.08} and Y ≥ 0.0447 × X^{0.4497}. Further, in an aspect, the method preferably comprises a step of adjusting the content of cycloalanylserine (mg/100 mL) (X) and the content of propylene glycol (g/100 mL) (Y) to satisfy Y ≤ 0.2659 × X^{-0.425} and Y ≥ 0.0022 × X^{0.551} or to satisfy Y ≤ 0.0533 × X^{-0.25} and Y ≥ 0.0045 × X^{0.3495}.

In the method, the method for adjusting the contents of cycloalanylserine, ethanol, and propylene glycol is not specifically limited, and the contents can be adjusted to predetermined ranges, for example, by adding cycloalanylserine, ethanol, and propylene glycol. The method for adding cycloalanylserine, ethanol, and propylene glycol is not specifically limited, and commercially available products or synthetic products of cycloalanylserine, ethanol, or propylene glycol may be added, or raw materials containing cycloalanylserine, ethanol, or propylene glycol may be added, for example. The content ranges of cycloalanylserine, ethanol, and propylene glycol are as mentioned above.

The type of the food or beverage product in the method is not specifically limited, as described above, but preferable examples of the food or beverage product in the present invention include beverages such as carbonated beverages, non-carbonated beverages, alcohol beverages, non-alcohol beverages, sports beverages, nutrition beverages, functional beverages, and near-water beverages. Further, the food or beverage product in the method of the present invention is preferably a transparent beverage. The "transparent beverage" is as described above.

The aforementioned method can further comprise the steps of adding an additive or the like, which is generally contained in food or beverage products and a step of packaging the food or beverage product in a container. The types of additives and container are as described above, and a known method can be used as the packaging method in the container.

In the aforementioned method, the various steps may be performed in any order, as long as the contents and the weight ratio of the food or beverage product finally obtained fall within the predetermined ranges.

### EXAMPLES

Hereinafter, the present invention will be described more specifically based on examples. The present invention is not limited to these examples.

### Example 1: Evaluation of influence of content of ethanol or propylene glycol on lingering unpleasant bitterness of cycloalanylserine

Sample beverages were prepared, with the content of cycloalanylserine and the content of ethanol or propylene glycol in the beverage variously changed, and were each subjected to a sensory evaluation test. The method for preparing each sample beverage and the method for the sensory evaluation test are shown below.

### <Sample beverages 1 to 40>

Sample beverages 1 to 40 were prepared by mixing cycloalanylserine (stock solution concentration: 1 mg/mL), ethanol (special grade 99.5%), and propylene glycol (special grade 99%) so that the content of cycloalanylserine in each sample beverage was 0.00050, 0.0018, 0.0073, 0.10, 1.8, 5.3, or 15 mg/100 mL, and the content of ethanol or propylene glycol in the sample beverage was 0, 0.0010, 0.010, 0.050, 0.10, 0.50, or 1.0 g/100 mL. Cycloalanylserine, available from Carl Bechem GmbH, with a purity of > 99% was used, and ethanol and propylene glycol, available from NACALAI TESQUE, INC. were used.

### <Sample beverages 41 to 48>

Sample beverages 41 to 48 were prepared by adding 0.1 g of a heat-treated product of soybean peptide (soybean extract), 0.2 g of a heat-treated product of tea peptide (tea extract), 0.2 g of a heat-treated product of whey peptide (whey extract), or 0.3 g of a heat-treated product of collagen peptide (collagen extract) to each sample beverage, and mixing ethanol or propylene glycol with each of the heat-treated product of peptides, so that the content of ethanol or propylene glycol in the sample beverage was 0.05 g/100 mL. The heat-treated products of various peptides were prepared by the following methods.

### (1) Preparation of heat-treated product of soybean peptide

The heat-treated product of soybean peptide used was obtained by treating soybean peptide with heat, followed by freeze drying. The heat-treated product of soybean peptide was produced by high-temperature high-pressure treatment of soybean peptide in a liquid. Specifically, about 15 ml of distilled water was added to 3 g of soybean peptide (Hinute AM, available from FUJI OIL CO., LTD.) and was put into an autoclave (available from TOMY SEIKO CO., LTD.), followed by high-temperature high-pressure treatment at 135°C and 0.31 MPa for 3 hours. Thereafter, it was subjected to freeze drying to obtain a heat-treated product of soybean peptide (soybean extract) in powder form.

### (2) Preparation of heat-treated product of tea peptide

The first-picked tea leaves (variety: Yabukita, and total nitrogen: 6.3%) from Kagoshima was used as a plant. This tea was first subjected to pretreatment for reducing water-soluble proteins (three times of pre-extraction). That is, 200 g of hot water was added to 10 g of tea, followed by appropriate stirring and extraction for 5 minutes. After the completion of the extraction, filtration with a 140 mesh was performed to collect an extraction residue (tea residue). 200 g of hot water was poured onto the tea residue, followed by extraction for 5 minutes, to collect the tea residue. Again, extraction from the tea residue was performed in the same manner to collect the tea residue.

Thereafter, the tea (tea residue) subjected to the pre-extraction was degraded with an enzyme. 200 g of hot water at 50°C was poured into the tea residue (total amount), and 1 g of protease (product name: PROTIN NY 100, available from Daiwa Fine Chemicals Co. Ltd.) was added thereto, followed by reaction in a water bath at 55°C for 3 hours under stirring (300 rpm) with a stirrer. Thereafter, it was held at 95°C for 30 minutes to inactivate the enzyme.

The enzyme-treated solution was heated in the form of a tea liquid mixture without solid-liquid separation. The heat treatment was performed in an autoclave (available from TOMY SEIKO CO., LTD.) using a high-temperature high-pressure fluid at 135°C for 3 hours. The solution after the treatment was filtered with a 140 mesh, to obtain a heat-treated product of tea peptide. Thereafter, it was subjected to freeze drying to obtain a heat-treated product of tea peptide (tea extract) in powder form.

### (3) Preparation of heat-treated product of collagen peptide

Collagen peptide (MDP1, available from Nippi, Incorporated) was added to distilled water to give 250 mg/mL and was put into an autoclave (available from TOMY SEIKO CO., LTD.), followed by high-temperature high-pressure treatment at 135°C and 0.31 MPa for 10 hours, to obtain a heat-treated product of collagen peptide.

### (4) Preparation of heat-treated product of whey peptide

30 ml of distilled water was added to 3 g of whey peptide PeptigenIF-3090 (available from Arla Foods amba with an average molecular weight of 300 to 400), whey peptide with an average molecular weight of 440, or casein peptide CU2500A (available from Morinaga Milk Industry Co., Ltd. with an average molecular weight of 375) and was put into an autoclave (available from TOMY SEIKO CO., LTD.), followed by high-temperature high-pressure treatment at 135°C and 0.31 MPa for 3 hours, to prepare a heat-treated product of whey peptide.

### <Sample beverages 49 to 56>

Sample beverages 49 to 56 were prepared by adding cycloalanylserine (chemically synthesized product) or a heat-treated product of soybean peptide to a commercially available carbonated beverage or near-water. 0.1 mL of a cycloalanylserine solution with a stock solution concentration of 1 mg/mL was added, and 0.1 g of the heat-treated product of soybean peptide prepared by the aforementioned methods was added thereto.

### <Sensory evaluation test>

Sample beverages 1 to 56 were subjected to a sensory evaluation by three expert panelists. Specifically, scoring was performed by the expert panelists based on the following criteria, and the average scores are shown in Tables 1 to 6. Beverages with the average score of 3 or more were determined to be favorable.

### (Criteria for sensory evaluation)

Score 5: Very favorably drinkable with stingy taste that is derived from cycloalanylserine and remains on the tongue greatly improved.
Score 4: Favorably drinkable with stingy taste that is derived from cycloalanylserine and remains on the tongue improved.
Score 3: Normally drinkable with stingy taste that is derived from cycloalanylserine and remains on the tongue slightly improved.
Score 2: Somehow drinkable even with strong stingy taste derived from cycloalanylserine or strong stingy taste of ethanol or propylene glycol remaining on the tongue.
Score 1: Undrinkable with very strong stingy taste derived from cycloalanylserine or very strong stingy taste of ethanol or propylene glycol remaining on the tongue.

**[Table 1]**

| | Cyclo(Ala-Ser) (stock solution concentration: 1 mg/mL) | Ethanol reagent (special grade 99.5%) | Total amount | Cyclo(Ala-Ser) concentration | Ethanol concentration | Sensory evaluation score |
|---|---|---|---|---|---|---|
| | (mL) | (mL) | (mL) | (mg/100mL) | (g/100mL) | |
| 1 | 0.1 | 0 | 100 | 0.1 | 0 | 2 |
| 2 | 1.8 | 0 | 100 | 1.8 | 0 | 1 |
| 3 | 5.3 | 0 | 100 | 5.3 | 0 | 1 |
| 4 | 0.0018 | 0.001 | 100 | 0.0018 | 0.001 | 3 |
| 5 | 0.1 | 0.001 | 100 | 0.1 | 0.001 | 3 |
| 6 | 5.3 | 0.001 | 100 | 5.3 | 0.001 | 2 |
| 7 | 0.0073 | 0.01 | 100 | 0.0073 | 0.01 | 5 |
| 8 | 1.8 | 0.01 | 100 | 1.8 | 0.01 | 3 |
| 9 | 15 | 0.01 | 100 | 15 | 0.01 | 1 |
| 10 | 0.0018 | 0.05 | 100 | 0.0018 | 0.05 | 4 |
| 11 | 0.1 | 0.05 | 100 | 0.1 | 0.05 | 5 |
| 12 | 5.3 | 0.05 | 100 | 5.3 | 0.05 | 3 |
| 13 | 0.0005 | 0.1 | 100 | 0.0005 | 0.1 | 2 |
| 14 | 0.0073 | 0.1 | 100 | 0.0073 | 0.1 | 5 |
| 15 | 1.8 | 0.1 | 100 | 1.8 | 0.1 | 4 |
| 16 | 0.0018 | 0.5 | 100 | 0.0018 | 0.5 | 3 |
| 17 | 0.1 | 0.5 | 100 | 0.1 | 0.5 | 3 |
| 18 | 5.3 | 0.5 | 100 | 5.3 | 0.5 | 2 |
| 19 | 0.1 | 1 | 100 | 0.1 | 1 | 1 |
| 20 | 5.3 | 1 | 100 | 5.3 | 1 | 1 |

**[Table 2]**

| | Cyclo(Ala-Ser) (stock solution concentration: 1 mg/mL) | Propylene glycol reagent (special grade 99.5%) | Total amount | Cyclo(Ala-Ser) concentration | Propylene glycol concentration | Sensory evaluation score |
|---|---|---|---|---|---|---|
| | (mL) | (mL) | (mL) | (mg/100mL) | (g/100mL) | |
| 21 | 0.1 | 0 | 100 | 0.1 | 0 | 2 |
| 22 | 1.8 | 0 | 100 | 1.8 | 0 | 2 |
| 23 | 5.3 | 0 | 100 | 5.3 | 0 | 1 |
| 24 | 0.0018 | 0.001 | 100 | 0.0018 | 0.001 | 4 |
| 25 | 0.1 | 0.001 | 100 | 0.1 | 0.001 | 3 |
| 26 | 5.3 | 0.001 | 100 | 5.3 | 0.001 | 2 |
| 27 | 0.0073 | 0.01 | 100 | 0.0073 | 0.01 | 4 |
| 28 | 1.8 | 0.01 | 100 | 1.8 | 0.01 | 4 |
| 29 | 15 | 0.01 | 100 | 15 | 0.01 | 1 |
| 30 | 0.0018 | 0.05 | 100 | 0.0018 | 0.05 | 4 |
| 31 | 0.1 | 0.05 | 100 | 0.1 | 0.05 | 5 |
| 32 | 5.3 | 0.05 | 100 | 5.3 | 0.05 | 4 |
| 33 | 0.0005 | 0.1 | 100 | 0.0005 | 0.1 | 2 |
| 34 | 0.0073 | 0.1 | 100 | 0.0073 | 0.1 | 5 |
| 35 | 1.8 | 0.1 | 100 | 1.8 | 0.1 | 3 |
| 36 | 0.0018 | 0.5 | 100 | 0.0018 | 0.5 | 3 |
| 37 | 0.1 | 0.5 | 100 | 0.1 | 0.5 | 3 |
| 38 | 5.3 | 0.5 | 100 | 5.3 | 0.5 | 2 |
| 39 | 0.1 | 1 | 100 | 0.1 | 1 | 1 |
| 40 | 5.3 | 1 | 100 | 5.3 | 1 | 1 |

**[Table 3]**

| | Content of various extracts | Ethanol reagent (special grade 99.5%) | Total amount | Cyclo(Ala-Ser) concentration | Ethanol concentration | Sensory evaluation score |
|---|---|---|---|---|---|---|
| | | (mL) | (mL) | (mg/100mL) | (g/100mL) | |
| 41 | Heat-treated product of soybean peptide: 0.1 g | 0.05 | 100 | 0.082 | 0.05 | 5 |
| 42 | Heat-treated product of tea peptide: 0.2 g | 0.05 | 100 | 0.14 | 0.05 | 5 |
| 43 | Heat-treated product of whey peptide:0.2g | 0.05 | 100 | 0.10 | 0.05 | 5 |
| 44 | Heat-treated product of collagen peptide: 0.3 g | 0.05 | 100 | 0.11 | 0.05 | 4 |

**[Table 4]**

| | Content of various extracts | Propylene glycol reagent (special grade 99.5%) | Total amount | Cyclo(Ala-Ser) concentration | Propylene glycol concentration | Sensory evaluation score |
|---|---|---|---|---|---|---|
| | | (mL) | (mL) | (mg/100mL) | (g/100mL) | |
| 45 | Heat-treated product of soybean peptide: 0.1 g | 0.05 | 100 | 0.082 | 0.05 | 5 |
| 46 | Heat-treated product of tea peptide: 0.2 g | 0.05 | 100 | 0.14 | 0.05 | 4 |
| 47 | Heat-teated product of whey peptide: 0.2 g | 0.05 | 100 | 0.10 | 0.05 | 5 |
| 48 | Heat-treated product of collagen peptide: 0.3 g | 0.05 | 100 | 0.11 | 0.05 | 5 |

**[Table 5]**

| | Content of various extracts | Beverage | Total amount | Cyclo(Ala-Ser) concentration | Ethanol concentration | Sensory evaluation score |
|---|---|---|---|---|---|---|
| | | | (mL) | (mg/100mL) | (g/100mL) | |
| 49 | Cyclo(Ala-Ser) stock solution: 0.1 mL | Carbonated beverage A: 99.9 mL | 100 | 0.1 | 0.09 | 4 |
| 50 | Cyclo(Ala-Ser) stock solution: 0.1 mL | Near-water A: 99.9 mL | 100 | 0.1 | 0.06 | 5 |
| 51 | Heat-treated product of soybean peptide: 0.1 g | Carbonated beverage A: 99.9 mL | 100 | 0.082 | 0.09 | 5 |
| 52 | Heat-Veated product of soybean peptide: 0.1 g | Near-water A: 99.9 mL | 100 | 0.082 | 0.06 | 5 |

**[Table 6]**

| | Content of various extracts | Beverage | Total amount | Cyclo(Ala-Ser) concentration | Propylene glycol concentration | Sensory evaluation score |
|---|---|---|---|---|---|---|
| | | | (mL) | (mg/100mL) | (g/100mL) | |
| 53 | Cyclo(Ala-Ser) stock solution: 0.1 mL | Carbonated beverage A: 99.9 mL | 100 | 0.1 | 0.10 | 4 |
| 54 | Cyclo(Ala-Ser) stock solution: 0.1 mL | Near-water A: 99.9 mL | 100 | 0.1 | 0.04 | 5 |
| 55 | Heat-treated product of soybean peptide: 0.1 g | Carbonated beverage A: 99.9 mL | 100 | 0.082 | 0.10 | 4 |
| 56 | Heat-treated product of soybean peptide: 0.1 g | Near-water A: 999 mL | 100 | 0.082 | 0.04 | 5 |

As shown in Tables 1 and 2, it turned out that beverages with a content of cycloalanylserine and a content of ethanol or propylene glycol falling within the ranges of the present invention all had a sensory evaluation score of 3 or more and had excellent drinkability with the lingering unpleasant bitterness unique to cycloalanylserine in the beverages reduced. Further, as shown in Tables 3 and 4, the effects of the present invention could be obtained also in the case of adjusting the content of cycloalanylserine using the heat-treated products of various peptides. Further, as shown in Tables 5 and 6, it turned out also that the effects of the present invention could be obtained in the case of adjusting the content of cycloalanylserine and the content of ethanol or propylene glycol by adding chemically synthesized cycloalanylserine or a heat-treated product of soybean peptide to a commercially available carbonated beverage or near-water. Accordingly, it was revealed that the present invention could achieve a food or beverage product having favorable taste, with lingering unpleasant bitterness unique to cycloalanylserine reduced, by adjusting the content of cycloalanylserine and the content of ethanol or propylene glycol in the food or beverage product to the ranges of the present invention.

### INDUSTRIAL APPLICABILITY

The present invention provides new means for preparing a food or beverage product having good taste with lingering unpleasant bitterness unique to cycloalanylserine in the food or beverage product reduced and therefore has high industrial applicability.

## Claims

1. A food or beverage product comprising cycloalanylserine, and ethanol and/or propylene glycol, wherein
a content of cycloalanylserine in the food or beverage product is 0.0015 to 5.0 mg/100 mL,
a content of ethanol in the food or beverage product is 0.00080 to 0.60 g/100 mL, and
a content of propylene glycol in the food or beverage product is 0.00080 to 0.60 g/100 mL.

2. The food or beverage product according to claim 1, wherein the content of cycloalanylserine is 0.0070 to 2.0 mg/100 mL.

3. The food or beverage product according to claim 1 or 2, wherein the content of ethanol is 0.0080 to 0.12 g/100 mL.

4. The food or beverage product according to any one of claims 1 to 3, wherein the content of propylene glycol is 0.0080 to 0.12 g/100 mL.

5. The food or beverage product according to any one of claims 1 to 4, wherein the content of cycloalanylserine (mg/100 mL) (X) and the content of ethanol (g/100 mL) (Y) satisfy Y ≤ 0.3837 × X^{-0.239} and Y ≥ 0.0028 × X^{0.6556}.

6. The food or beverage product according to any one of claims 1 to 5, wherein the content of cycloalanylserine (mg/100 mL) (X) and the content of ethanol (g/100 mL) (Y) satisfy Y ≤ 0.2307 × X^{-0.08} and Y ≥ 0.0447 × X^{0.4497}.

7. The food or beverage product according to any one of claims 1 to 6, wherein the content of cycloalanylserine (mg/100 mL) (X) and the content of propylene glycol (g/100 mL) (Y) satisfy Y ≤ 0.2659 × X^{-0.425} and Y ≥ 0.0022 × X^{0.551}.

8. The food or beverage product according to any one of claims 1 to 7, wherein the content of cycloalanylserine (mg/100 mL) (X) and the content of propylene glycol (g/100 mL) (Y) satisfy Y ≤ 0.0533 × X^{-0.25} and Y ≥ 0.0045 × X^{0.3495}.

9. The food or beverage product according to any one of claims 1 to 8, wherein cycloalanylserine is added as a heat-treated product of animal and plant-derived peptide.

10. The food or beverage product according to claim 9, wherein the heat-treated product of animal or plant-derived peptide is obtained from soybean peptide, tea peptide, whey peptide, or collagen peptide.

11. The food or beverage product according to any one of claims 1 to 10, wherein the food or beverage product is a transparent beverage.

12. The food or beverage product according to any one of claims 1 to 11, wherein the food or beverage product is packaged in a container.

13. A method for producing a food or beverage product, comprising:
step (a) of adding cycloalanylserine to adjust a content of cycloalanylserine in the food or beverage product to 0.0015 to 5.0 mg/100 mL; and
step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL.

14. The production method according to claim 13, wherein the content of cycloalanylserine adjusted in step (a) is 0.0070 to 2.0 mg/100 mL.

15. The production method according to claim 13 or 14, wherein the content of ethanol adjusted in step (b) is 0.0080 to 0.12 g/100 mL.

16. The production method according to any one of claims 13 to 15, wherein the content of propylene glycol adjusted in step (b) is 0.0080 to 0.12 g/100 mL.

17. A method for reducing lingering unpleasant bitterness of cycloalanylserine in a food or beverage product, comprising:
step (a) of adding cycloalanylserine to adjust a content of cycloalanylserine in the food or beverage product to 0.0015 to 5.0 mg/100 mL; and
step (b) of adding ethanol to adjust a content of ethanol in the food or beverage product to 0.00080 to 0.60 g/100 mL, and/or adding propylene glycol to adjust a content of propylene glycol in the food or beverage product to 0.00080 to 0.60 g/100 mL.

18. The method according to claim 17, wherein the content of cycloalanylserine adjusted in step (a) is 0.0070 to 2.0 mg/100 mL.

19. The method according to claim 17 or 18, wherein the content of ethanol adjusted in step (b) is 0.0080 to 0.12 g/100 mL.

20. The method according to any one of claims 17 to 19, wherein the content of propylene glycol adjusted in step (b) is 0.0080 to 0.12 g/100 mL.
